# EUROPEAN PATENT SPECIFICATION

(11) **EP 1 892 197 B1**
(45) Date of publication and mention of the grant of the patent: **06.10.2010**
(21) Application number: 07016127.8
(22) Date of filing: 16.08.2007
(51) Int. Cl.: B65D 79/00

(54) **Fast freeze container and seal**
Schnellfrierender Behälter und Versiegelung dafür
Récipient et joint de surgélation

(30) Priority: 22.08.2006 US 507654
(43) Date of publication of application: 27.02.2008
(73) Proprietor: Dart Industries Inc., Orlando, Florida 32837 (US)
(72) Inventor: Backaert, Dimitri M.C.J., 9310 Moorsel (BE)
(74) Representative: Barton, Matthew Thomas

(56) References cited:
- EP-A- 0 276 606
- CA-A1- 2 504 816

## Description

The present invention is broadly concerned with durable long-lasting reusable container seals, and more particularly, concerned with a reusable flexible container seal adapted to conform to the shape of the foodstuff contents of the container and to provide an air-tight seal for enhanced conservation of food quality.

Prior art container seals, such as thermoplastic lids and flexible film covers, have been commonly used to hermetically seal the container to preserve the foodstuff contents such as meat, fish, and vegetables while stored in a freezer.

However, one of the shortcomings of the prior art seals is that they leave too much air or head space within the container if the foodstuff contents occupy a space smaller than the size of the container. They cannot conform to the shape of the foodstuff contents inside the container, which will result in longer freezing time of the foodstuff and lowered food quality.

In order to improve this situation containers like the one described in EP 0 276 606, upon which the preamble of claims 1 and 2 is based, have been proposed.

Another shortcoming of the flexible prior art seals is the lack of any proper functioning air valve or vent means for the seal for venting before, during, or after heating the container in a microwave.

It would therefore be desirable to provide a reusable flexible container seal that can conform to the shape and configuration of the foodstuff contents of the container to reduce the air and eliminated the head space and provide an airtight seal for the container.

It would therefore be desirable to provide a built-in valve mechanism or venting means for the reusable flexible seal to allow venting before, during, or after the container is placed into a microwave.

It is an object of the present invention to provide an improved reusable flexible seal which is removably mountable to the rim of a container.

According to a first aspect of the present invention, there is provided reusable flexible seal removably mountable to the rim of
a container, comprising:
a flexible main portion;
a peripheral ring surrounding said flexible main portion adapted to engage said rim of said container; wherein,
said flexible main portion is dimensioned and configured to generally eliminate the head space over the contents of the container when assembled on the container characterized in that the reusable flexible seal further comprises a vent means attached to said peripheral ring operable to create a gap between a portion of an upper sealing surface of the container rim and a portion of a lower surface of said peripheral ring;
and wherein said vent means further comprises at least one tab extending inwardly from said downwardly extending leg of said peripheral ring, wherein said at least one tab that may rest on said upper surface of said container rim to create said gap.

According to another aspect of the present invention, there is provided a reusable flexible seal removably mountable to the rim of
a container, comprising:
a flexible main portion;
a peripheral ring surrounding said flexible main portion adapted to engage said rim of said container; wherein,
said flexible main portion generally conforms and contacts an upper surface of food contents of the container when said reusable flexible seal is assembled in a sealing position over the container;
characterized in that the reusable flexible seal further comprises a vent means attached to said peripheral ring operable to create a gap between a portion of an upper sealing surface of the container rim and a portion of a lower surface of said peripheral ring;
and wherein said vent means further comprises at least one tab extending inwardly from said downwardly extending leg of said peripheral ring, wherein said at least one tab that may rest on said upper surface of said container rim to create said gap.

Advantageously, the peripheral ring further comprises a downwardly extending leg having an annular flange at a tip thereof, and wherein the lower surface of the peripheral ring becomes flush against the upper sealing surface of the container rim when the reusable flexible seal is in an assembled sealed position over the container.

Preferably, the container rim further comprises a downwardly extending leg adapted to removably engage the annular flange of said flexible seal.

Advantageously, said flexible main portion is made from silicone.

Conveniently, said flexible main portion further comprises at least one side wall having an upper edge integrally molded to said peripheral ring and a bottom wall having an upper surface and a lower surface, wherein said lower surface contacts the foodstuff contents of the container as the bottom wall conforms to the shape and configuration of the foodstuff contents.

So that the invention may be more readily understood, and so that further features thereof may be appreciated, an embodiment of the invention will now be described, by way of example, with reference to the accompanying drawings, in which:
Figure 1 is a perspective view of the container and the reusable flexible seal assembled in a sealing configuration over the container according to the first representative embodiment of the present invention;
Figure 2 is an exploded perspective view of the container and the reusable flexible seal according to Figure 1;
Figure 3 is an exploded perspective view of the container and a bottom perspective view of the reusable flexible seal, wherein the container includes foodstuff therein;
Figure 4 is a perspective view of the container and the reusable flexible seal placed in a sealing configuration over the container illustrating the seal as it conforms to the foodstuff contents inside the container of Figure 3;
Figure 5 is a side sectional view of the container and the reusable flexible seal taken along line 5-5 in Figure 1;
Figure 6 is a side sectional view of the container and the reusable flexible seal taken along line 6-6 in Figure 4;
Figure 7 is a bottom perspective view of the container and the reusable seal assembled in a vent position;
Figure 8 is a partial side sectional view of the container and flexible reusable seal in a closed position taken along line 8-8 in Figure 1;
Figure 9 is a partial side sectional enlarged view of the flexible reusable seal assembled in a vent position in Figure 6;

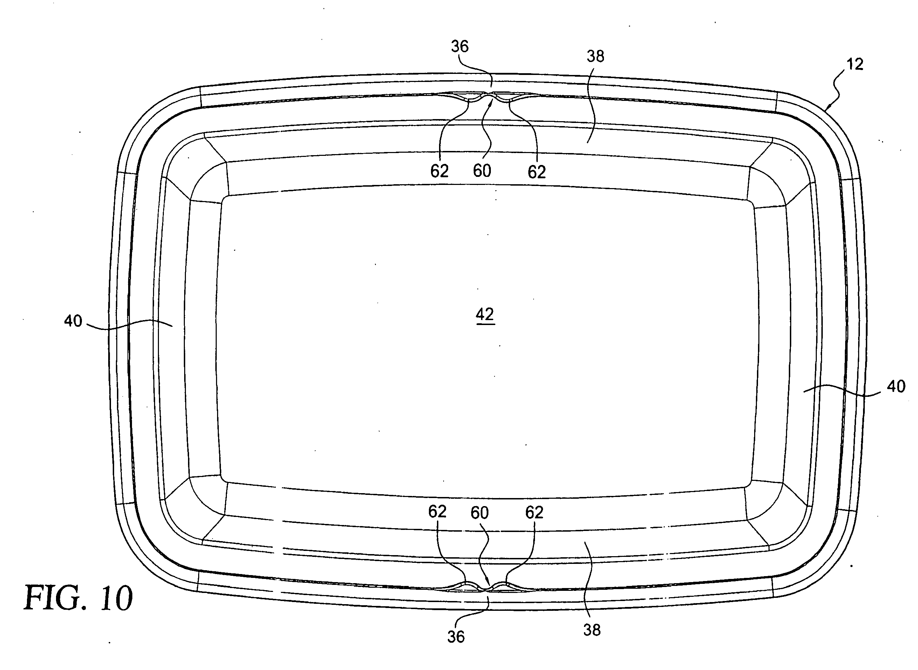

Figure 10 is a bottom plan view of the container and reusable flexible seal in a non-venting sealed position illustrating the venting tabs on the reusable seal engaged underneath the peripheral edge of the container;
Figure 11 is a side sectional view of the container and the reusable flexible seal illustrating the flexible part of the seal in contact with the foodstuff contents;
Figure 12 is an exploded perspective view of the container and the reusable flexible seal in accordance with a second representative embodiment of the present invention; and,
Figure 13 is a side sectional view of the container and the reusable flexible seal in Figure 12 in an assembled non-venting position.

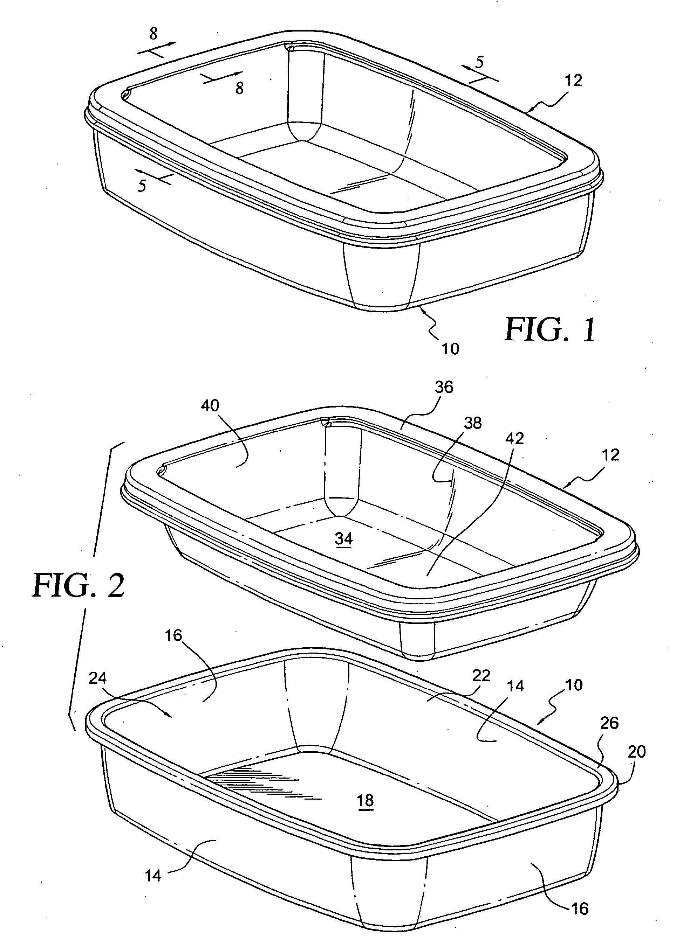

Referring now to the drawings, and more specifically Figures 1 to 3, wherein the showings are for the purpose of illustrating the preferred embodiment of the invention only and not for the purpose of limiting the same, a container 10 preferably formed of rigid plastic material and a reusable flexible seal 12 each having a generally rectangular shape and configuration are illustrated. It is noted that other shapes and configurations such as, but not limited to, square, oval, triangular or circular-shaped container and seal are also contemplated to be within the scope of the present invention.

The container 10 includes a pair of longer sidewalls 14, a pair of shorter sidewalls 16, a bottom 18, and an upper peripheral edge 20 bounding a top opening 22 which provides access within a storage area 24 of the container 10.

The upper peripheral edge 20 of the container 10 includes a flat upper sealing surface 26 and a downwardly extending annular leg 28 having an engaging tip 30. The downwardly extending leg 28 further includes an outer surface 32.

The reusable flexible seal 12 is made from silicone approved for food contact or other thin flexible material molded preferably in a self supporting configuration and includes a flexible main portion 34 integrally molded to a substantially stiffer yet flexible mounting peripheral ring 36 having substantially the same rectangular shape and configuration as the container rim but slightly smaller in proportions so to be able to laterally stretch and seal the container 10.

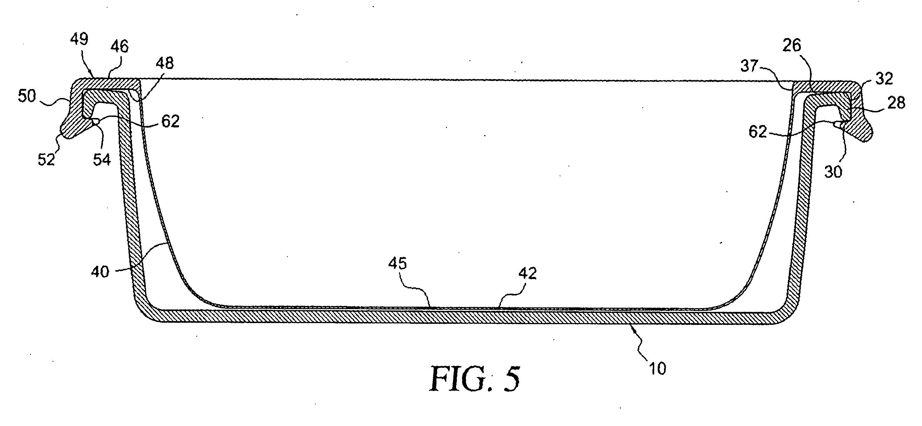

Now referring to Figure 5, the reusable flexible seal 12 comprises a pair of longer sidewalls 38, a pair of shorter sidewalls 40 bounding a bottom wall 42 having an upper surface 45 and a lower surface 47. The peripheral ring 36 is integrally molded around the upper edges 37 of the plurality of sidewalls and includes an outwardly extending and horizontal portion 44 having an upper surface 46 and a lower surface 48, a downwardly extending leg 50 having a bulbous portion 52 at one end thereof, and an inwardly extending annular flange 54 which, as will be explained herein, engages the engaging tip 30 to secure the reusable flexible seal 12 on the container 10.

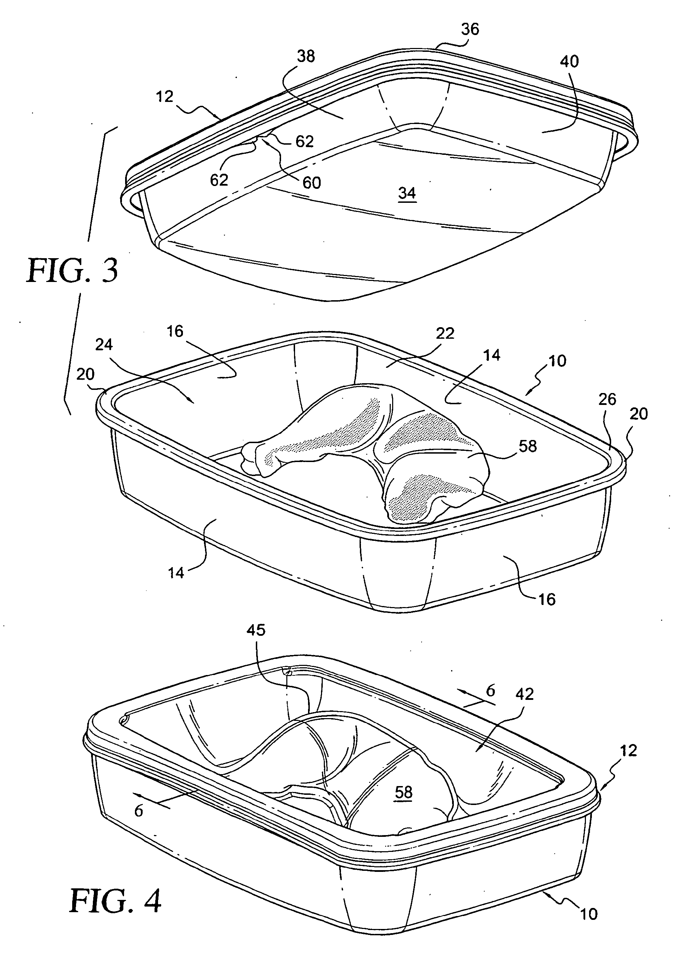

Referring again to Figures 3 and 4, the container 10 is illustrated having foodstuff 58 disposed therein. In this embodiment, the foodstuff 58 illustrates the underfilled situation wherein the size and amount of the foodstuff 58 contents extends below the peripheral edge of the container 10 thereby creating head space above the foodstuff 58. It is also contemplated, although not shown, that the foodstuff may create an overfilled situation wherein the foodstuff fills the container above the peripheral edge of the container.

In order to secure the reusable flexible seal 12 over the container 10, the horizontal portion 44 of the peripheral ring 36 is placed over the upper peripheral edge 20 of one of the sidewalls of the container, preferably one of the shorter sidewalls 16, wherein the annular flange 54 engages and is positioned underneath the engaging tip 30, the inner surface 56 becomes substantially flush with the outer surface 32 of the downwardly extending leg 28, and the lower surface 48 becomes flush against the flat upper sealing surface 26 of the upper peripheral edge 20. Similar steps are repeated for the other three sides of the container, preferably the longer sidewalls 14 while the flexible main silicone portion 34 is pressed downwardly over the foodstuff 58 so that the lower surface 47 of the bottom wall 42 contacts and conforms to the shape of the foodstuff 58 while the excess air is vented or "burped" through the unsealed side of the container at the unsealed shorter sidewall 16.

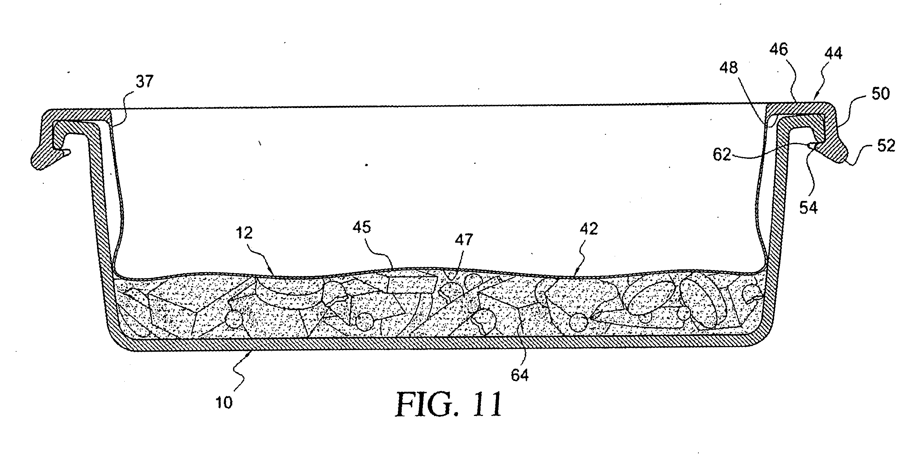

Referring to Figure 11, the container 10 is illustrated as containing foodstuff contents 64 of generally liquid form, such as, but not limited to, stew or soup, illustrating the preferred embodiment of the reusable flexible seal 12 generally eliminating the head space over the contents 64 while the bottom wall 42 of the flexible main portion 34 contacts and conforms to the shape of the contents 64.

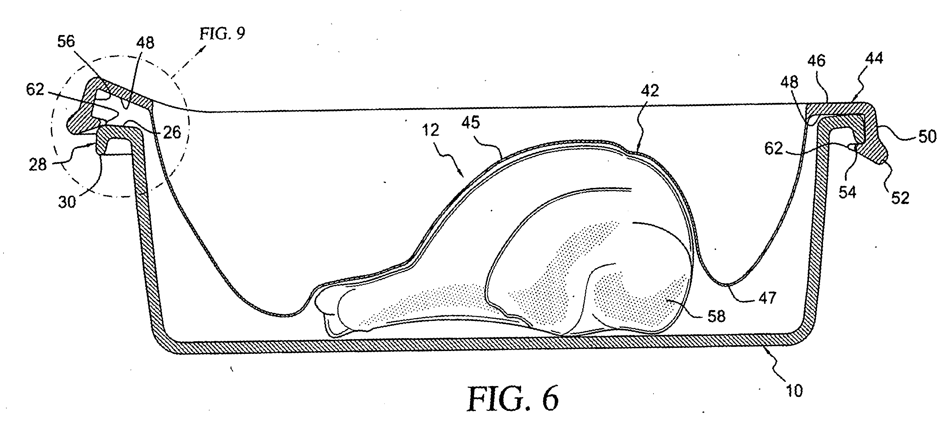

As best seen in Figures 6 through 8, the reusable flexible seal 12 is laterally stretched by the user pulling on the bulbous head 52 so that the annular flange 54 clears the outer surface 32 of the downwardly extending leg 28 and pressed down while the bottom wall 42 is still pressed over the foodstuff 58, thereby creating a partially internal vacuum or underpressure while substantially stabilizing the foodstuff 58 within the container for enhanced freshness and conservation of food quality while placed inside the freezer.

As stated hereinbefore, the flexible main portion 34 of the reusable seal 12 is created as a one-component molded part with the peripheral ring 36 and made from approved silicone or other thin flexible material for use is storing food, and which can stretch to assemble onto the container and return to its original shape and configuration when removed. The reusable flexible seal may if desired be configured so as to be provided with a self-sustaining shape that will allow it to generally retain its original shape and configuration without significantly deforming or collapsing on its own when placed on a support surface. Moreover, manufacturing the reusable flexible seal from silicone or other thin flexible material allows not only using the container and seal directly from the freezer into a microwave, but also using the container and seal in an oven. This assumes that the container is manufactured from a material suitable for use in the oven.

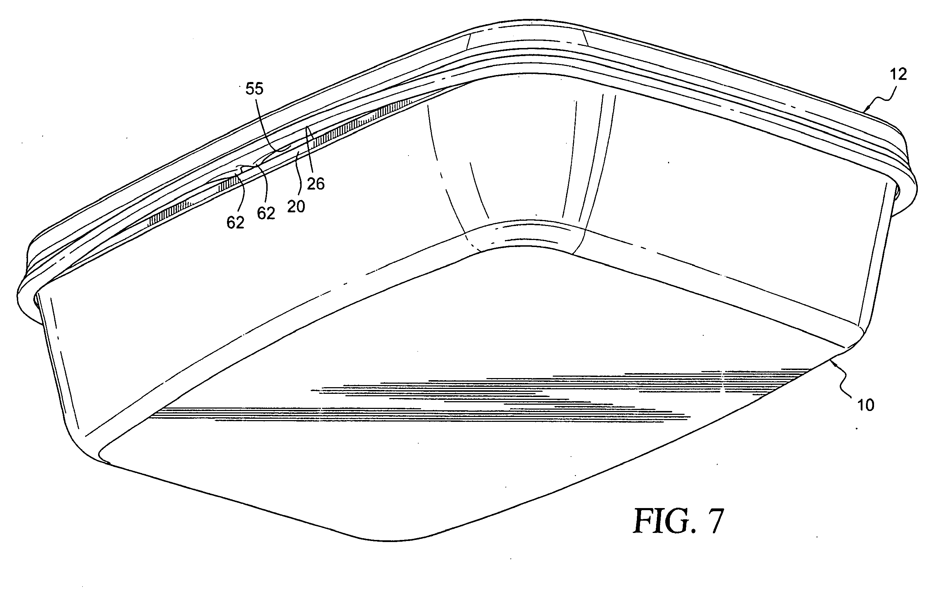

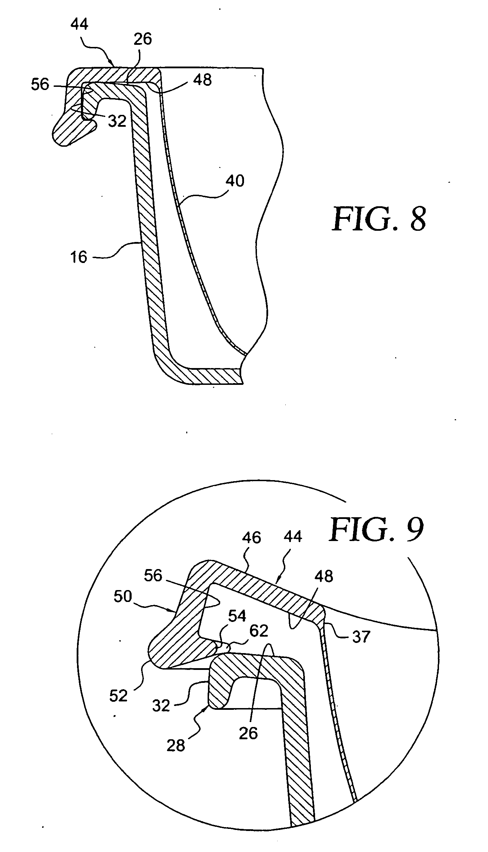

Referring now to Figures 7 and 9, the venting means or the valve mechanism for the reusable flexible seal 12 is illustrated. Broadly, the valve mechanism 60 is preferably positioned in the middle of the opposite longer sidewalls 38 of the seal along the peripheral ring 36, although, it is also contemplated that the valve mechanism 60 may be positioned on the peripheral ring at the shorter sidewalls, all four sidewalls, any single one of the sidewalls, or corners along the peripheral ring 36. More specifically, the valve mechanism 60 includes a pair of tabs 62 laterally and inwardly extending from the annular flange 54 of the downwardly extending leg 50, where in the assembled sealed position of the reusable flexible seal 12 over the container 10, the pair of tabs 62 is positioned underneath the downwardly extending leg 28. It is also contemplated that the valve mechanism 60 may also include a single tab, or a plurality of tabs.

In order to vent the container before, during, or after heating in the microwave, the reusable flexible seal 12 is stretched outwardly by pulling the peripheral ring 36 along the upper edges of the longer sidewalls 38 disengaging the annular flange 54 from the engaging tip 30. Then, by pulling the longer sides upwardly slightly and placing the pair tabs 62 over the flat upper sealing surface 26, as seen in Figures 6 and 7, a slight gap 55 is created along a portion of the lower surface 48 of the peripheral ring 36 and the upper sealing surface 26 thereby allowing the air to vent out before completely removing the reusable flexible seal 12 from the container 10.

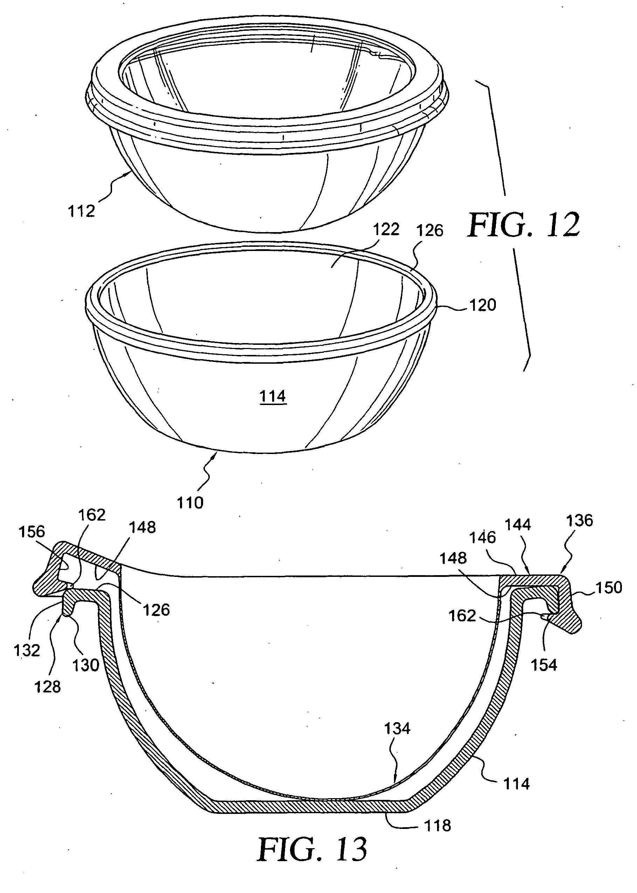

Referring now to Figures 12 and 13, a second representative embodiment of the present invention is illustrated. A bowl 110 preferably formed of rigid plastic material and a reusable flexible seal 112 having a generally hemispherical shape and configuration are illustrated. The bowl 110 includes a sidewall 114, a bottom 118, and an upper peripheral edge 120 bounding a top opening 122 which provides access within the bowl 110.

The upper peripheral edge 120 of the bowl 110 includes a flat upper sealing surface 126 and a downwardly extending annular leg 128 having an engaging tip 130. The downwardly extending leg 128 further includes an outer surface 132.

The reusable flexible seal 112 includes a flexible main portion 134 integrally molded to a substantially stiffer yet flexible mounting peripheral circular band 136 integrally molded around the upper edge 137 of the flexible main portion 134 and includes an outwardly extending and horizontal portion 144 having an upper surface 146 and a lower surface 148, a downwardly extending leg 150 having a bulbous portion 152 at one end thereof, and an inwardly extending annular flange 154 which engages the engaging tip 130 to secure the reusable flexible seal 112 on bowl 110.

The venting means or the valve mechanism 160 is preferably positioned in an opposing configuration on the peripheral ring 136. More specifically, the valve mechanism 160 includes a pair of tabs 162 laterally and inwardly extending from the annular flange 154 of the downwardly extending leg 150, where in the assembled sealed position of the reusable flexible seal 112 over the container 110, the pair of tabs 162 is positioned underneath the downwardly extending leg 128. It is also contemplated that the valve mechanism 160 may also include a single tab, or a plurality of tabs.

While preferred embodiments of the invention have been shown and described, various modifications and substitutions may be made thereto without departing from the spirit and scope of the invention. Accordingly, it is to be understood that the present invention has been described by way of illustration only, and this description should not be construed as limiting to the several claims appended hereto.

When used in this specification and claims, the terms "comprises" and "comprising" and variations thereof mean that the specified features, steps or integers are included. The terms are not to be interpreted to exclude the presence of other features, steps or components.

The features disclosed in the foregoing description, or the following claims, or the accompanying drawings, expressed in their specific forms or in terms of a means for performing the disclosed function, or a method or process for attaining the disclosed result, as appropriate, may, separately, or in any combination of such features, be utilised for realising the invention in diverse forms thereof.

## Claims

1. A reusable flexible seal (12) removably mountable to the rim of
a container, comprising:
a flexible main portion (34);
a peripheral ring (36) surrounding said flexible main portion (34) adapted to engage said rim of said container; wherein,
said flexible main portion is dimensioned and configured to generally eliminate the head space over the contents of the container when assembled on the container; whereby
the reusable flexible seal further comprises a vent means attached to said peripheral ring operable to create a gap between a portion of an upper sealing surface (26) of the container rim and a portion of a lower surface of said peripheral ring; **characterized in that**
said vent means further comprises at least one tab extending inwardly from said downwardly extending leg of said peripheral ring, wherein said at least one tab (62) may rest on said upper surface of said container rim (26) to create said gap.

2. A reusable flexible seal (12) removably mountable to the rim of a container, comprising:
a flexible main portion (34);
a peripheral ring (36) surrounding said flexible main portion (34) adapted to engage said rim of said container; wherein,
said flexible main portion generally conforms and contacts an upper surface of food contents (58) of the container when said reusable flexible seal is assembled in a sealing position over the container; whereby
the reusable flexible seal further comprises a vent means attached to said peripheral ring operable to create a gap between a portion of an upper sealing surface (26) or the container rim and a portion of a lower surface of said peripheral ring; **characterized in that**
said vent means further comprises at least one tab extending inwardly from said downwardly extending leg of said peripheral ring, wherein said at least one tab (62) may rest on said upper surface of said container rim (26) to create said gap.

3. The reusable flexible seal of claim 1 or claim 2, wherein the peripheral ring further comprises a downwardly extending leg (29) having an annular flange at a tip thereof, and wherein the lower surface of the peripheral ring becomes flush against the upper sealing surface of the container rim when the reusable flexible seal is in an assembled sealed position over the container.

4. The reusable flexible seal of claim 3, wherein the container rim (32) further comprises a downwardly extending leg adapted to removably engage the annular flange of said flexible seal.

5. The reusable flexible seal of any preceding claim, wherein said flexible main portion (43) is made from silicone.

6. The reusable flexible seal of preceding claim, wherein said flexible main portion further comprises at least one side wall having an upper edge integrally molded to said peripheral ring and a bottom wall having an upper surface and a lower surface (47), wherein said lower surface (47) contacts the foodstuff contents (59) of the container as the bottom wall conforms to the shape and configuration of the foodstuff contents.

## Patentansprüche

1. Wiederverwendbare elastische Dichtung (12), die entfernbar an dem Rand eines Behälters angebracht werden kann und Folgendes umfasst:
einen elastischen Hauptabschnitt (34),
einen Umfangsring (36), der den elastischen Hauptabschnitt (34) umgibt und dafür ausgelegt ist, in den Rand des Behälters einzugreifen; wobei
der elastische Hauptabschnitt so bemessen und konfiguriert ist, dass er den Freiraum über dem Inhalt des Behälters im Allgemeinen beseitigt, wenn er auf dem Behälter angebracht ist;
wobei die wiederverwendbare elastische Dichtung des Weiteren ein Belüftungsmittel umfasst, das an dem Umfangsring angebracht ist und einen Spalt zwischen einem Abschnitt einer oberen Abdichtfläche (16) des Behälterrands und einem Abschnitt einer unteren Fläche des Umfangsrings erzeugen kann;
**dadurch gekennzeichnet, dass** das Belüftungsmittel des Weiteren mindestens eine Lasche umfasst, die sich einwärts von dem sich abwärts erstreckenden Steg des Umfangsrings erstreckt, wobei die mindestens eine Lasche (12) auf der oberen Fläche des Behälterrands (26) ruhen kann, um den Spalt zu erzeugen.

2. Wiederverwendbare elastische Dichtung (12), die entfernbar an dem Rand eines Behälters angebracht werden kann und Folgendes umfasst:
einen elastischen Hauptabschnitt (34),
einen Umfangsring (36), der den elastischen Hauptabschnitt (34) umgibt und dafür ausgelegt ist, in den Rand des Behälters einzugreifen; wobei
der elastische Hauptabschnitt sich an eine obere Fläche eines Lebensmittelinhalts (58) des Behälters im Allgemeinen anpasst und diese berührt, wenn die wiederverwendbare elastische Dichtung in einer abdichtenden Position über dem Behälter angebracht wird;
wobei die wiederverwendbare elastische Dichtung des Weiteren ein Belüftungsmittel umfasst, das an dem Umfangsring angebracht ist und einen Spalt zwischen einem Abschnitt einer oberen Abdichtfläche (16) des Behälterrands und einem Abschnitt einer unteren Fläche des Umfangsrings erzeugen kann;
**dadurch gekennzeichnet, dass** das Belüftungsmittel des Weiteren mindestens eine Lasche umfasst, die sich einwärts von dem sich abwärts erstreckenden Steg des Umfangsrings erstreckt, wobei die mindestens eine Lasche (62) auf der oberen Fläche des Behälterrands (26) ruhen kann, um den Spalt zu erzeugen.

3. Wiederverwendbare elastische Dichtung nach Anspruch 1 oder 2, wobei der Umfangsring des Weiteren einen sich abwärts erstreckenden Steg (29) umfasst, der an der Spitze desselben einen ringförmigen Flansch aufweist und wobei die untere Fläche des Umfangsrings bündig an der oberen Abdichtfläche des Behälterrands anliegt, wenn sich die wiederverwendbare elastische Dichtung in einer angebrachten Position über dem Behälter befindet.

4. Wiederverwendbare elastische Dichtung nach Anspruch 3, wobei der Behälterrand (32) einen sich abwärts erstreckenden Steg umfasst, der dafür ausgelegt ist, in den ringförmigen Flansch der elastischen Dichtung entfernbar einzugreifen.

5. Wiederverwendbare elastische Dichtung nach einem der vorhergehenden Ansprüche, wobei der elastische Hauptabschnitt (49) aus Silikon besteht.

6. Wiederverwendbare elastische Dichtung nach einem der vorhergehenden Ansprüche, wobei der elastische Hauptabschnitt des Weiteren Folgendes umfasst: mindestens eine Seitenwand, die eine obere Kante aufweist, die einstückig mit dem Umfangsring geformt ist, sowie eine untere Wand, die eine obere Fläche und eine untere Fläche (47) aufweist, wobei die untere Fläche (47) den Lebensmittelinhalt (59) des Behälters berührt, wenn sich die untere Wand an die Form und die Konfiguration des Lebensmittelinhalts anpasst.

## Revendications

1. Un joint souple réutilisable (12) montable de manière amovible sur le rebord d'un conteneur, comprenant :
une partie principale souple (34),
une couronne périphérique (36) entourant ladite partie principale souple (34) adaptée de façon à entrer en prise avec ledit rebord dudit conteneur, où,
ladite partie principale souple est dimensionnée et configurée de façon à éliminer de manière générale l'espace vide au-dessus des contenus du conteneur lorsqu'elle est montée sur le conteneur,
grâce à quoi le joint souple réutilisable comprend en outre un moyen d'évent fixé à ladite couronne périphérique actionnable de façon à créer un vide entre une partie d'une surface de fermeture hermétique supérieure (73) du rebord de conteneur et une partie d'une surface inférieure de ladite couronne périphérique,
**caractérisé en ce que** ledit moyen d'évent comprend en outre au moins une languette s'étendant vers l'intérieur à partir de ladite patte s'étendant vers le bas de ladite couronne périphérique, où ladite au moins une languette (62) peut reposer sur ladite surface supérieure dudit rebord de conteneur (26) de façon à créer ledit vide.

2. Un joint souple réutilisable (12) montable de manière amovible sur le rebord d'un conteneur, comprenant :
une partie principale souple (34),
une couronne périphérique (36) entourant ladite partie principale souple (34) adaptée de façon à entrer en prise avec ledit rebord dudit conteneur, où,
ladite partie principale souple se conforme généralement et entre en contact avec une surface supérieure de contenus alimentaires (58) du conteneur lorsque ledit joint souple réutilisable est assemblé dans une position de fermeture hermétique par dessus le conteneur,
grâce à quoi le joint souple réutilisable comprend en outre un moyen d'évent fixé à ladite couronne périphérique actionnable de façon à créer un vide entre une partie d'une surface de fermeture hermétique supérieure (26) du rebord de conteneur et une partie d'une surface inférieure de ladite couronne périphérique,
**caractérisé en ce que** ledit moyen d'évent comprend en outre au moins une languette s'étendant vers l'intérieur à partir de ladite patte s'étendant vers le bas de ladite couronne périphérique, où ladite au moins une languette (62) peut reposer sur ladite surface supérieure dudit rebord de conteneur (26) de façon à créer ledit vide.

3. Le joint souple réutilisable selon la Revendication 1 ou 2, où la couronne périphérique comprend en outre une patte s'étendant vers le bas (29) possédant une collerette annulaire à une extrémité de celle-ci, et où la surface inférieure de la couronne périphérique vient s'aligner contre la surface de fermeture hermétique supérieure du rebord de conteneur lorsque le joint souple réutilisable est dans une position scellée assemblée par dessus le conteneur.

4. Le joint souple réutilisable selon la Revendication 3, où le rebord de conteneur (32) comprend en outre une patte s'étendant vers le bas adaptée de façon à entrer en prise de manière amovible avec la collerette annulaire dudit joint souple.

5. Le joint souple réutilisable selon l'une quelconque des Revendications précédentes, où ladite partie principale souple (43) est fabriquée à partir de silicone.

6. Le joint souple réutilisable selon l'une quelconque des Revendications précédentes, où ladite partie principale souple comprend en outre au moins une paroi latérale possédant une bordure supérieure intégralement moulée à ladite couronne périphérique et une paroi inférieure possédant une surface supérieure et une surface inférieure (47), où ladite surface inférieure (47) entre en contact avec les contenus alimentaires (59) du conteneur lorsque la paroi inférieure se conforme à la forme et à la configuration des contenus alimentaires.
